(19) **Europäisches Patentamt European Patent Office Office européen des brevets**

(11) **EP 4 237 673 B1**

(12) **FASCICULE DE BREVET EUROPEEN**

(45) Date de publication et mention de la délivrance du brevet:
**18.03.2026 Bulletin 2026/12**

(21) Numéro de dépôt: **21798339.4**

(22) Date de dépôt: **20.10.2021**

(51) Classification Internationale des Brevets (IPC):
**F02D 35/02** (2006.01)   **F02D 41/14** (2006.01)
**F02D 41/28** (2006.01)

(52) Classification Coopérative des Brevets (CPC):
**F02D 41/1498; F02D 35/023;** F02D 2041/286;
F02D 2200/0614; Y02T 10/40

(86) Numéro de dépôt international:
**PCT/EP2021/079088**

(87) Numéro de publication internationale:
**WO 2022/090026 (05.05.2022 Gazette 2022/18)**

(54) **PROCEDE DE DETERMINATION D'UN INDICATEUR DE STABILITE D'UNE COMBUSTION DANS UN CYLINDRE D'UN MOTEUR A COMBUSTION INTERNE**

VERFAHREN ZUR BESTIMMUNG EINES VERBRENNUNGSSTABILITÄTSINDIKATORS IN EINEM ZYLINDER EINER BRENNKRAFTMASCHINE

METHOD FOR DETERMINING A COMBUSTION STABILITY INDICATOR IN A CYLINDER OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2020 FR 2011200**

(43) Date de publication de la demande:
**06.09.2023 Bulletin 2023/36**

(73) Titulaire: **IFP Energies nouvelles
92500 Rueil-Malmaison (FR)**

(72) Inventeurs:
• **JEAN, Maxime
92852 Rueil-Malmaison Cedex (FR)**
• **LEROY, Thomas
92852 Rueil-Malmaison Cedex (FR)**

(74) Mandataire: **IFP Energies nouvelles
Département Propriété Industrielle
Rond Point de l'échangeur de Solaize
BP3
69360 Solaize (FR)**

(56) Documents cités:
EP-A1- 3 495 645    DE-T5- 112018 003 385
GB-A- 2 474 512    JP-A- H08 144 830

## Description

### Domaine technique

La présente invention concerne le domaine de la commande de la combustion d'un moteur à combustion interne à allumage commandé. En particulier, la présente invention concerne la détermination d'un indicateur de stabilité de combustion dans un moteur à combustion interne à allumage commandé.

Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé (air et carburant et éventuellement gaz brûlés) est renfermé dans cette chambre de combustion et subit une étape de compression puis une étape de combustion sous l'effet d'un allumage commandé, par une bougie.

Les restrictions croissantes sur les émissions de dioxyde de carbone $CO_2$, ajoutées à la réduction du parc de véhicules diesel renforcent l'intérêt pour l'amélioration de l'efficacité des moteurs à allumage commandé. Une approche prometteuse consiste à réduire la richesse de la combustion (rapport carburant / air), afin d'atteindre ce que l'on appelle communément les conditions de mélange pauvre. Une autre approche consiste à augmenter le taux de recirculation des gaz brulés EGR (de l'anglais « Exhaust Gaz Recirculation »). Ces conditions permettent d'augmenter le rendement thermodynamique, et donc de diminuer la consommation de carburant. Un inconvénient des fortes dilutions est une instabilité de combustion plus élevée. La stabilité de combustion est à prendre dans le sens de la variation, cycle à cycle, du rendement global du moteur. Les principales conséquences indésirables de telles instabilités sont une diminution du rendement du moteur, des fluctuations de couple potentiellement dommageables et une augmentation des émissions polluantes.

Actuellement, la stabilité de la combustion est assurée par une calibration appropriée, et intégrant une marge de sécurité, du moteur à combustion interne. Un estimateur de la stabilité de la combustion n'est donc pas nécessaire. Cependant, les avantages de la combustion pauvre nécessitent de faire fonctionner le moteur à la limite de la stabilité de combustion, ce qui, dans ce cas, rend nécessaire l'estimation de la stabilité de la combustion et une rétroaction.

### Technique antérieure

L'instabilité de combustion est conventionnellement quantifiée par le coefficient de variation COV (de l'anglais « Coefficient Of Variation », c'est-à-dire le ratio de l'écart-type sur la moyenne, tous deux calculés sur des fenêtres glissantes) d'une grandeur scalaire, mesurée à chaque combustion, et reflétant sa qualité. La qualité est prise au sens de la proportion de carburant effectivement brûlée à chaque cycle.

En régime de combustion instable, une fraction du carburant demeure imbrûlée, conduisant à une baisse indésirable du rendement global du moteur, à une augmentation des émissions polluantes (HC et particules notamment) et à des vibrations mécaniques.

Plusieurs mesures de la qualité de combustion ont déjà été proposées : température des gaz d'échappement (décrite notamment dans la demande de brevet US2007051170), taux d'oxygène des gaz d'échappement (décrit notamment dans la demande de brevet KR20090065372), ou encore mesures d'un capteur d'ionisation présent dans la chambre de combustion (décrites notamment dans la demande de brevet US2004084018).

Cependant, l'abaissement des coûts des capteurs de pression cylindre permet d'envisager leur utilisation dans des véhicules de série. La PMI (Pression Moyenne Indiquée, proportionnelle au couple du moteur) peut être dérivée du signal de ce capteur de pression. Traduisant directement le rendement du moteur, cette mesure constitue une excellente candidate pour la détermination d'un indicateur de stabilité de la combustion. Un exemple d'application est connu du document JP H08 144830 A.

En régime stationnaire, sur banc instrumenté, le coefficient de variation COV de la PMI est calculé traditionnellement sur des fenêtres glissantes longues (plusieurs centaines de cycles). Néanmoins, le calcul du COV sur des moteurs de série en situation de conduite réelle (essentiellement en régime transitoire) ne peut se faire de la même façon. En effet, pour que l'estimation du COV ait un sens, il faut que la distribution statistique de la mesure de qualité de combustion reste relativement constante. Par exemple, lors d'un transitoire de charge, la PMI (donc le couple) varie rapidement, et sa distribution, en particulier sa valeur moyenne, s'en trouve modifiée. Même un moteur à combustion interne n'ayant que des combustions idéales aura un COV important dans tous ses transitoires de couple (à la hausse comme à la baisse), alors qu'une valeur nulle serait souhaitable. Chaque variation de PMI entraine une surestimation de l'instabilité de combustion.

Pour pallier ce problème, la demande de brevet WO19163507 décrit une méthode mettant en œuvre le coefficient de variation COV de la PMI de laquelle on soustrait une tendance linéaire estimée sur une fenêtre glissante. Cette méthode est fortement bruitée par l'imprécision de l'estimation des deux paramètres modélisant la tendance linéaire. Par conséquent, l'indicateur de stabilité de la combustion reste imprécis.

La demande de brevet US2016146702 divulgue une méthode mettant en œuvre un indicateur complexe qui additionne trois contributions, un terme relatif au coefficient de variation COV de la PMI, un terme relatif à l'angle vilebrequin au maximum de pression dans le cylindre, et un terme relatif à la durée de combustion. Toutefois, cette méthode ne résout pas le problème de la surestimation du COV pendant les transitoires de couple du moteur à combustion interne.

La demande de brevet US2019010890 décrit une méthode mettant en œuvre le coefficient de variation COV de la PMI et d'une cible fonction du régime, du couple, et de la température du moteur à combustion interne, pour contrôler l'état du moteur pour minimiser l'écart entre la cible et le COV de la PMI. Toutefois, cette méthode ne résout pas les problèmes de la surestimation du COV pendant les transitoires de couple du moteur à combustion interne et de l'incertitude dans l'estimation du COV si elle s'appuie sur des fenêtres glissantes courtes.

## Résumé de l'invention

La présente invention a pour but de déterminer précisément un indicateur de stabilité de la combustion, même pendant les régimes transitoires du moteur à combustion interne. Pour cela, l'invention concerne un procédé de détermination d'un indicateur de stabilité d'une combustion qui détermine le coefficient de variation COV d'un ratio de la pression moyenne indiquée PMI divisée par le produit de la quantité de carburant injecté et du rendement du moteur. En effet, ce ratio est aussi invariant que possible à toute variation autre qu'une évolution de la qualité de combustion, ce qui permet d'améliorer la précision en particulier pendant les transitoires de couple du moteur à combustion interne, ce qui permet un contrôle optimisé du moteur à combustion interne à la limite de la stabilité. Ainsi, le rendement du moteur à combustion interne peut être amélioré.

L'invention concerne un procédé de détermination d'un indicateur de stabilité d'une combustion dans au moins un cylindre d'un moteur à combustion interne à allumage commandé, ledit au moins un cylindre dudit moteur à combustion interne étant équipé d'un capteur de pression, dans lequel on met en œuvre les étapes suivantes :

a. Pour chaque cycle, on détermine une quantité de carburant injecté dans ledit au moins un cylindre,
b. Pour chaque cycle, on mesure ladite pression au sein dudit au moins un cylindre au moyen dudit capteur de pression, et on en déduit une pression moyenne indiquée,
c. Pour chaque cycle, on détermine un rendement dudit moteur à combustion interne, et
d. On détermine un ratio formé par ladite pression moyenne indiquée divisée par un produit dudit rendement par ladite quantité de carburant injecté dans ledit au moins un cylindre
e. On caractérise ledit indicateur de stabilité à partir dudit ratio déterminé, pour chaque cycle.

Selon un mode de réalisation, on détermine ladite quantité de carburant injecté dans ledit au moins un cylindre au moyen d'une consigne de quantité de carburant injecté.

Selon l'invention, on détermine ledit rendement au moyen d'une cartographie du rendement, de préférence ladite cartographie du rendement dépend du régime et du couple du moteur à combustion interne.

Selon l'invention, on caractérise ledit indicateur de stabilité par détermination du ratio de l'écart type dudit ratio déterminé sur la moyenne dudit ratio déterminé. Conformément à une mise en œuvre, on caractérise ledit indicateur de stabilité par détermination d'un estimateur d'une distribution dudit indicateur de stabilité d'une combustion, ledit estimateur déterminant un intervalle de confiance de l'indicateur de stabilité d'une combustion à partir d'un nombre N de cycles précédents le cycle en cours.

De manière avantageuse, ledit estimateur est bayesien.

De préférence, ledit nombre N de cycles est compris entre 5 et 20.

Avantageusement, ledit intervalle de confiance contient la valeur du ratio de l'écart type sur la moyenne du ratio de l'écart type dudit ratio déterminé sur la moyenne dudit ratio déterminé réel dans exactement 98% des cas.

Selon un aspect, ledit moteur à combustion interne est un moteur à combustion interne fonctionnant avec des richesses pauvres, et/ou ledit moteur à combustion interne est équipé d'une préchambre de combustion et/ou ledit moteur à combustion interne est équipé d'un système de recirculation des gaz brûlés.

De plus, l'invention concerne un procédé de commande d'un moteur à combustion interne à allumage commandé, au moins un cylindre dudit moteur à combustion interne étant équipé d'un capteur de pression, dans lequel on met en œuvre les étapes suivantes :

a. On détermine un indicateur de stabilité d'une combustion au moyen du procédé de détermination d'un indicateur de stabilité d'une combustion selon l'une des caractéristiques précédentes ; et
b. On commande ledit moteur à combustion interne en fonction dudit indicateur de stabilité de combustion déterminé.

Conformément à un mode de réalisation, on commande ledit moteur à combustion interne par contrôle d'un actionneur dudit moteur à combustion interne, en fonction de la comparaison dudit indicateur de stabilité avec un seuil prédéfini.

Selon une mise en œuvre, on met en œuvre la détermination dudit estimateur selon l'une des caractéristiques précédentes, et on commande ledit moteur à combustion interne au moyen desdites étapes suivantes, en fonction d'un seuil prédéfini θ dudit indicateur :

i) si ledit seuil dudit indicateur θ est inférieur à une borne inférieure $cov_{min}$ dudit intervalle de confiance dudit ratio de l'écart type dudit ratio déterminé sur la moyenne dudit ratio déterminé, alors on diminue l'actionneur;
ii) si ledit seuil dudit indicateur θ est supérieur à une borne supérieure $cov_{max}$ dudit intervalle de confiance dudit ratio de l'écart type dudit ratio déterminé sur la moyenne dudit ratio déterminé, alors on augmente l'actionneur ; et
iii) si ledit seuil dudit indicateur θ est compris dans ledit intervalle de confiance ($cov_{min}$, $cov_{max}$), alors on ne modifie pas l'actionneur.

L'invention concerne également un système de commande d'un moteur à combustion interne à allumage commandé comprenant au moins un calculateur mettant en œuvre le procédé de commande selon l'une des caractéristiques précédentes.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre d'un procédé selon l'une des caratéristiques, lorsque ledit programme est exécuté sur un ordinateur ou un calculateur.

D'autres caractéristiques et avantages du procédé et du système selon l'invention, apparaîtront à la lecture de la description ci-après d'exemples non limitatifs de réalisations, en se référant aux figures annexées et décrites ci-après.

**Liste des figures**

La figure 1 illustre les étapes du procédé de détermination d'un indicateur de stabilité selon un premier mode de réalisation de l'invention.

La figure 2 illustre les étapes du procédé de détermination d'un indicateur de stabilité selon un deuxième mode de réalisation de l'invention.

La figure 3 illustre les étapes du procédé de commande d'un moteur à combustion interne selon une première mise en œuvre de l'invention.

La figure 4 illustre les étapes du procédé de commande d'un moteur à combustion interne selon une deuxième mise en œuvre de l'invention.

La figure 5 représente un exemple de cartographie du rendement du moteur à combustion interne.

La figure 6 représente la PMI et la grandeur $\dfrac{PMI}{\eta Q_{inj}}$ en fonction du temps, pour un exemple de réalisation.

La figure 7 illustre l'étape de comparaison pour l'estimateur mis en œuvre dans la deuxième mise en œuvre du procédé de commande selon l'invention.

**Description des modes de réalisation**

La présente invention concerne la détermination d'un indicateur de stabilité d'une combustion, qui se déroule dans un cylindre d'un moteur à combustion interne à allumage commandé. L'indicateur de stabilité de la combustion traduit la stabilité de la combustion (variation, cycle à cycle, du rendement global du moteur). Le moteur à combustion interne comporte au moins un capteur de pression pour au moins un cylindre du moteur à combustion.

L'invention peut être mise en œuvre pour tout type de moteur à combustion interne à allumage commandé. Toutefois, l'invention est particulièrement adaptée pour les moteurs à combustion interne à allumage commandé ayant une richesse réduite de la combustion (rapport carburant / air), afin d'atteindre ce que l'on appelle les conditions de mélange pauvre. Classiquement, les conditions de mélange sont pauvres lorsque la proportion d'air est supérieur à 14,5 fois celle de carburant. De plus, l'invention est particulièrement adaptée pour les moteurs à combustion interne équipés d'un système de recirculation des gaz brûlés EGR. En outre, l'invention est particulièrement adaptée pour les moteurs à combustion interne à préchambre (ou avec chambre de précombustion).

Selon l'invention, le procédé de détermination, en temps réel, d'un indicateur de stabilité de combustion met en œuvre les étapes suivantes :

1/ détermination de la quantité de carburant

2/ mesure de la pression et détermination de la PMI

3/ détermination du rendement du moteur

4/ détermination du ratio $\dfrac{PMI}{\eta Q_{inj}}$

5/ détermination de l'indicateur de stabilité

Les étapes 1 à 5 peuvent être mises en œuvre par des moyens informatiques, notamment un calculateur/contrôleur d'un système de commande d'un moteur à combustion interne. Les étapes 1 à 3 sont réalisées simultanément pour chaque cycle : il n'existe pas de notion d'ordre pour la réalisation de ces étapes. Ces étapes seront détaillées dans la suite de la description.

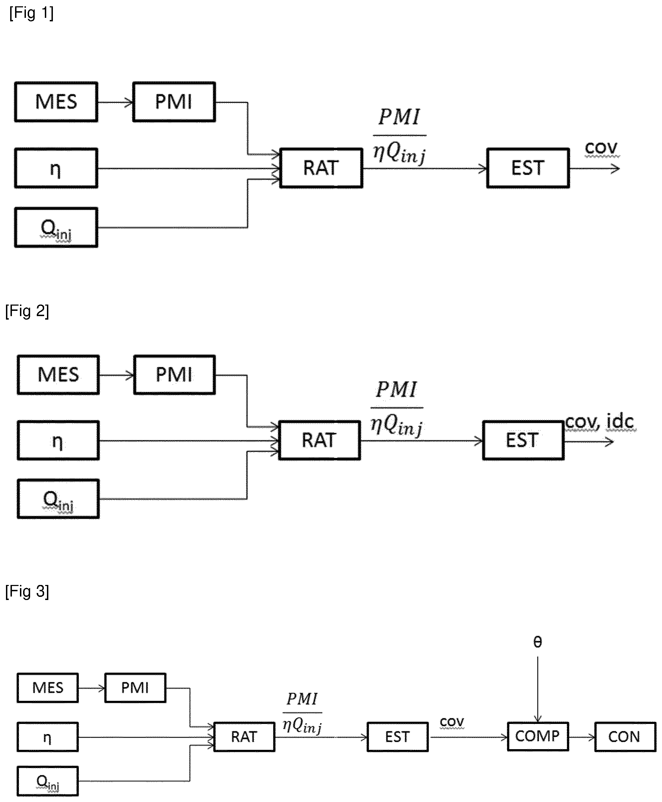

La figure 1 illustre, schématiquement et de manière non limitative, les étapes du procédé de détermination de l'indicateur de stabilité selon un premier mode de réalisation de l'invention. Le procédé comporte une étape de mesure MES de la pression, qui permet d'en déduire la pression moyenne indiquée PMI. En parallèle, on détermine le rendement du moteur à combustion interne $\eta$ et la quantité de carburant injecté $Q_{inj}$. Ces trois paramètres déterminés sont ensuite utilisés pour déterminer un ratio RAT permettant de déterminer le ratio $\dfrac{PMI}{\eta Q_{inj}}$. On en déduit EST alors le coefficient de variation cov pour former l'indicateur de stabilité de la combustion.

Selon un deuxième mode de réalisation de l'invention, le procédé de détermination d'un indicateur de stabilité de combustion peut déterminer un estimateur de la distribution de l'indicateur de stabilité de combustion. Pour ce mode de réalisation, le procédé de détermination d'un indicateur de stabilité de combustion met en œuvre les étapes suivantes :

1/ détermination de la quantité de carburant

2/ mesure de la pression et détermination de la PMI

3/ détermination du rendement du moteur

4/ détermination du ratio $\dfrac{PMI}{\eta Q_{inj}}$

6/ estimation de la distribution de l'indicateur

Les étapes 1 à 4 et 6 peuvent être mises en œuvre par des moyens informatiques, notamment un calculateur/contrôleur d'un système de commande d'un moteur à combustion interne. Les étapes 1 à 3 sont réalisées simultanément pour chaque cycle : il n'existe pas de notion d'ordre pour la réalisation de ces étapes. Ces étapes seront détaillées dans la suite de la description.

La figure 2 illustre, schématiquement et de manière non limitative, les étapes du procédé de détermination de l'indicateur de stabilité selon un deuxième mode de réalisation de l'invention. Le procédé comporte une étape de mesure MES de la pression, qui permet d'en déduire la pression moyenne indiquée PMI. En parallèle, on détermine le rendement du moteur à combustion interne $\eta$ et la quantité de carburant injecté $Q_{inj}$. Ces trois paramètres déterminés sont ensuite utilisés pour calculer un ratio RAT permettant de déterminer le ratio $\dfrac{PMI}{\eta Q_{inj}}$. On détermine alors un estimateur EST de la distribution de l'indicateur de stabilité. Cet estimateur détermine un intervalle de confiance idc de l'indicateur, à savoir le cov du ratio $\dfrac{PMI}{\eta Q_{inj}}$.

Conformément à une mise en œuvre de l'invention, l'invention concerne également un procédé de commande, en temps réel, d'un moteur à combustion interne à allumage commandé. Pour ce procédé de commande, on commande le moteur à combustion interne en fonction de l'indicateur de stabilité de la combustion déterminé.

Ainsi, selon une première mise en œuvre du procédé de commande, on peut mettre en œuvre le procédé de détermination de l'indicateur de stabilité de combustion selon le premier mode de réalisation (par exemple tel qu'illustré en figure 1). Pour cette mise en œuvre, le procédé de commande peut comporter les étapes suivantes :

1/ détermination de la quantité de carburant

2/ mesure de la pression et détermination de la PMI

3/ détermination du rendement du moteur

4/ détermination du ratio $\frac{PMI}{\eta Q_{inj}}$

5/ détermination de l'indicateur de stabilité

7/ commande du moteur à combustion interne

Les étapes 1 à 5 et 7 peuvent être mises en œuvre par des moyens informatiques, notamment un calculateur/contrôleur d'un système de commande d'un moteur à combustion interne. Les étapes 1 à 3 sont réalisées simultanément pour chaque cycle : il n'existe pas de notion d'ordre pour la réalisation de ces étapes. Ces étapes seront détaillées dans la suite de la description.

La figure 3 illustre, schématiquement et de manière non limitative, les étapes du procédé de commande selon une première mise en œuvre de l'invention. Le procédé comporte une étape de mesure MES de la pression, qui permet d'en déduire la pression moyenne indiquée PMI. En parallèle, on détermine le rendement du moteur à combustion interne $\eta$ et la quantité de carburant injecté $Q_{inj}$. Ces trois paramètres déterminés sont ensuite utilisés pour déterminer un ratio RAT permettant de déterminer le ratio $\frac{PMI}{\eta Q_{inj}}$. On en déduit par estimation EST alors le coefficient de variation covpour former l'indicateur de stabilité de la combustion . Puis, on commande CON le moteur à combustion interne après une comparaison COMP entre l'indicateur de stabilité de la combustion cov et un seuil prédéfini de l'indicateur $\theta$.

Selon une deuxième mise en œuvre du procédé de commande, on peut mettre en œuvre le procédé de détermination de l'indicateur de stabilité de combustion selon le deuxième mode de réalisation (par exemple tel qu'illustré en figure 2). Pour cette mise en œuvre, le procédé de commande peut comporter les étapes suivantes :

1/ détermination de la quantité de carburant

2/ mesure de la pression et détermination de la PMI

3/ détermination du rendement du moteur

4/ détermination du ratio $\frac{PMI}{\eta Q_{inj}}$

6/ estimation de la distribution de l'indicateur

7/ commande du moteur à combustion interne

Les étapes 1 à 4 et 6 à 7 peuvent être mises en œuvre par des moyens informatiques, notamment un calculateur/contrôleur d'un système de commande d'un moteur à combustion interne. Les étapes 1 à 3 sont réalisées simultanément pour chaque cycle : il n'existe pas de notion d'ordre pour la réalisation de ces étapes. Ces étapes seront détaillées dans la suite de la description.

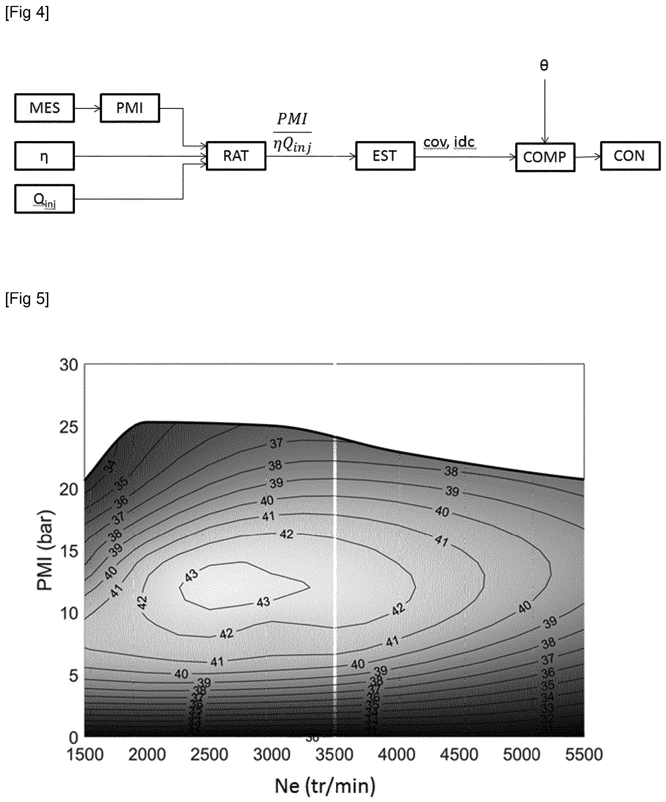

La figure 4 illustre, schématiquement et de manière non limitative, les étapes du procédé de commande selon une deuxième mise en œuvre de l'invention. Le procédé comporte une étape de mesure MES de la pression, qui permet d'en déduire la pression moyenne indiquée PMI. En parallèle, on détermine le rendement du moteur à combustion interne

$\eta$ et la quantité de carburant injecté $Q_{inj}$. Ces trois paramètres déterminés sont ensuite utilisés pour déterminer un ratio RAT permettant de déterminer le ratio $\frac{PMI}{\eta Q_{inj}}$. On détermine alors un estimateur EST de la distribution de l'indicateur de stabilité. , Cet estimateur détermine un intervalle de confiance idc de l'indicateur, à savoir le coefficient de variation cov du ratio $\frac{PMI}{\eta Q_{inj}}$. Puis, on commande CON le moteur à combustion interne en fonction de l'indicateur de stabilité de la combustion ind, après une comparaison COMP de l'intervalle de confiance idc et d'un seuil prédéfini de l'indicateur $\theta$.

**1/ Détermination de la quantité de carburant**

Lors de cette étape, on détermine, pour chaque cycle, la quantité de carburant injecté dans l'au moins un cylindre du moteur à combustion interne. On appelle cycle, l'ensemble des quatre phases de fonctionnement d'un moteur à combustion : admission, compression, détente, échappement, correspondant à deux tours de vilebrequin.

Selon un mode de réalisation de l'invention, la quantité de carburant injecté dans le cylindre peut être une consigne de quantité de carburant injecté dans le cylindre. Cette consigne de quantité de carburant injecté peut être déterminée par le calculateur/contrôleur du moteur à combustion interne, en fonction notamment d'une consigne du couple et du régime moteur. Par exemple, la consigne de quantité de carburant injecté peut n'être connue qu'en boucle ouverte. Dans ce cas, le contrôleur du moteur à combustion interne peut imposer une durée d'injection. On peut alors utiliser un modèle, qui transforme cette durée d'injection en masse de carburant.

Alternativement, la quantité de carburant injecté dans le cylindre peut être mesurée au moyen d'au moins un capteur.

**2/ Mesure de la pression et détermination de la PMI**

Lors de cette étape, on détermine, pour chaque cycle, la pression au sein du cylindre au moyen du capteur de pression. Puis, on détermine la pression moyenne indiquée PMI à partir du signal de ce capteur par un calcul intégral sur chaque cycle de la pression mesurée. La pression moyenne indiquée PMI est la pression moyenne qui règne dans la chambre de combustion d'un moteur à combustion pendant un cycle. Elle correspond au ratio du travail fourni par le fluide moteur (mélange carburant-comburant) par la cylindrée du moteur.

**3/ Détermination du rendement du moteur**

Lors de cette étape, on détermine, pour chaque cycle, le rendement attendu du moteur à combustion interne.

Selon un mode de réalisation, on peut déterminer le rendement attendu au moyen d'une cartographie du rendement qui dépend du point de fonctionnement du moteur à combustion interne ; le rendement peut dépendre par exemple du régime et du couple du moteur à combustion interne. Toutefois, afin d'améliorer la précision de la détermination du rendement, il est possible de prendre en compte d'autres paramètres, par exemple l'avance à l'allumage.

La figure 5 est un exemple non limitatif de cartographie du rendement $\eta$ en % en fonction du régime du moteur à combustion interne Ne en tr/min et de la PMI en bar ($10^{-1}$ MPa). Le niveau de gris au sein de la cartographie est représentatif du rendement. On rappelle que la PMI est liée au couple du moteur à combustion interne, par conséquent cette cartographie peut être en fonction du régime et du couple du moteur à combustion interne.

**4/ Détermination du ratio $\frac{PMI}{\eta Q_{inj}}$**

Lors de cette étape, on détermine, pour chaque cycle, un ratio de la pression moyenne indiquée (déterminée à l'étape 2) divisée par le produit du rendement (déterminé à l'étape 3) par la quantité de carburant injecté (déterminée à l'étape 1). Ce ratio peut s'écrire $\frac{PMI}{\eta Q_{inj}}$ avec PMI la pression moyenne indiquée, $\eta$ le rendement, et $Q_{inj}$ la quantité de carburant injecté.

**5/ Détermination de l'indicateur de stabilité**

Lors de cette étape, on caractérise l'indicateur de stabilité en déterminant directement l'indicateur de combustion, en tant que coefficient de variation du ratio déterminé à l'étape précédente.

En d'autres termes, on détermine le ratio de l'écart-type divisé par la moyenne du ratio de la pression moyenne indiquée divisée par le produit du rendement par la quantité de carburant injecté. La moyenne et l'écart-type sont déterminés sur des fenêtres glissantes de N cycles (précédents le cycle en cours). De manière avantageuse, le nombre N peut être supérieur ou égal à 5, de préférence compris entre 5 et 20, et de manière préférée entre 7 et 15, et peut valoir environ 10. En effet, au moins 5 valeurs permettent d'avoir une fenêtre temporelle utile. De plus, la limite de 20 mesures permet de former une fenêtre réactive et permet de limiter la mémoire vive utilisée pour le procédé selon ce mode de réalisation l'invention. Cependant, pour une application ne nécessitant pas une forte réactivité, le nombre N peut être pris aussi grand que possible. L'indicateur IND peut donc s'écrire : $IND = COV\left(\dfrac{PMI}{\eta Q_{inj}}\right)$ avec COV le ratio de l'écart-type divisé par la moyenne, PMI la pression moyenne indiquée, $\eta$ le rendement du moteur, $Q_{inj}$ la quantité de carburant injecté dans le cylindre. Le coefficient de variation COV d'une variable X peut s'écrire : $COV(X) = \dfrac{\sigma(X)}{\mu(X)}$ avec $\sigma(X)$ l'écart-type de la variable X, et $\mu(X)$ la moyenne de la variable X.

Ainsi, l'indicateur de stabilité de combustion formé est le coefficient de variation d'une grandeur qui reflète la qualité de la combustion, indépendamment des variations de couple du moteur. En effet, le ratio de la pression moyenne indiquée par la quantité de carburant injecté est proportionnel au rendement instantané du moteur, à l'échelle de chaque cycle.

Les variations cycle à cycle du ratio $\dfrac{PMI}{Q_{inj}}$ reflètent les variations de rendement global du moteur. Bien que la quantité de carburant injecté peut être biaisée (imprécision des injecteurs), tant que ce biais, exprimé en facteur multiplicatif, est constant, le COV de la grandeur $\dfrac{PMI}{Q_{inj}}$ n'est pas entaché. La constance de ce biais, à l'échelle des fenêtres de calcul (N cycles) est raisonnable. Afin de corriger la surestimation du COV qui résulterait d'un transitoire reliant deux points de fonctionnement aux rendements attendus sensiblement différents (le rendement global du moteur va alors nécessairement varier, indépendamment de toute instabilité de combustion), on prend en compte le rendement cartographié du moteur en calculant, à chaque cycle, le ratio $\dfrac{PMI}{\eta Q_{inj}}$. Le rendement cartographié peut certes donner une valeur biaisée du rendement idéal du moteur. Mais tant que ce biais, exprimé en facteur multiplicatif, reste constant, à l'échelle des fenêtres de calcul (N cycles), le ratio $\dfrac{PMI}{\eta_{carto} Q_{inj}}$ demeure invariant aux changements de rendement idéal du moteur. Ce ratio est moins sensible aux transitoires de charge, et uniquement sensible aux instabilités de combustion.

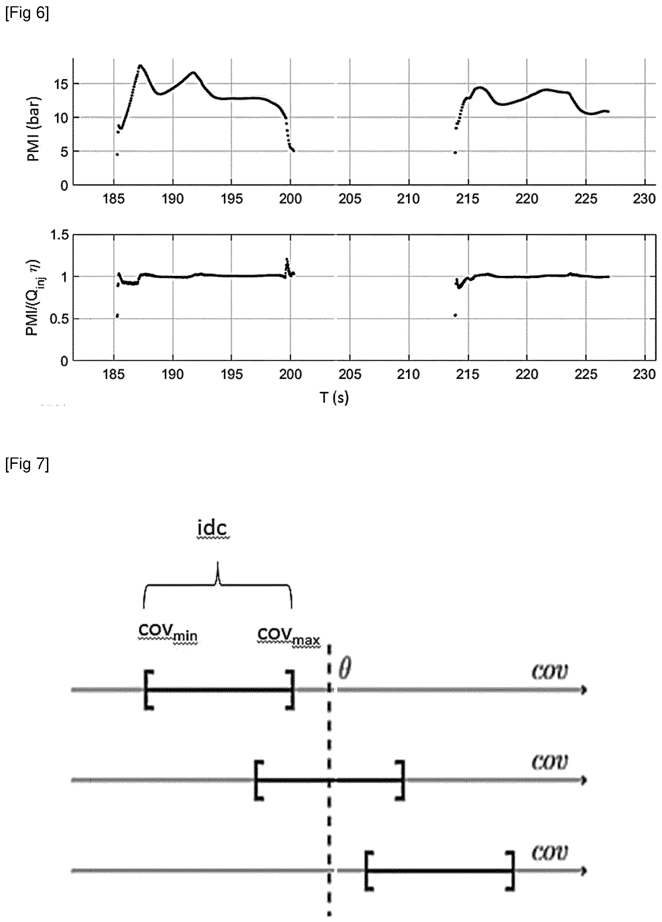

La figure 6 illustre dans la partie supérieure l'évolution de la PMI en fonction du temps T en s pour un exemple d'une portion d'un cycle de conduite, simulée sans instabilités de combustion. Par conséquent, pour cet exemple, l'indicateur de stabilité de la combustion devrait être nul. La figure 7 illustre, pour le même exemple, dans la partie inférieure l'évolution du ratio $\dfrac{PMI}{\eta Q_{inj}}$ en fonction du temps T en s. On remarque que le ratio $\dfrac{PMI}{\eta Q_{inj}}$ est plus constant que la PMI, en particulier pour les régimes transitoires. Par conséquent, le coefficient de variation COV du ratio $\dfrac{PMI}{\eta Q_{inj}}$ est plus proche de 0 que le COV de la PMI. Il en résulte que l'indicateur de stabilité de la combustion défini par l'invention reste précis pendant les transitoires du moteur à combustion interne.

6/ Estimation de la distribution de l'indicateur

Lors de cette étape facultative, on peut caractériser l'indicateur de stabilité au moyen d'un estimateur de la distribution de l'indicateur de stabilité d'une combustion. Cet estimateur détermine un intervalle de confiance du coefficient de variation du ratio déterminé à l'étape 5.

L'estimation de l'intervalle de confiance permet notamment d'obtenir une commande robuste. L'estimateur détermine un intervalle de confiance de l'indicateur de stabilité d'une combustion à partir d'un nombre N de cycles précédents le cycle en cours.

Pour cette étape, on considère que les ratios $\dfrac{PMI}{\eta Q_{inj}}$ déterminés à l'étape 4 suivent une loi de distribution stochastique. De préférence, la loi stochastique est une distribution pouvant être approchée par une distribution normale.

En effet, cette distribution est particulièrement adaptée, car elle correspond aux observations expérimentales. Une telle distribution est déterminée par les deux paramètres suivants : la moyenne et l'écart type. Le COV est un bon indicateur de l'état de la stabilité de la combustion.

Une telle estimation peut être réalisée rapidement avec un nombre limité de mesures, ce qui permet une commande en temps réel, avec une demande en mémoire limitée. De plus, cet estimateur assure la stabilité au procédé selon l'invention, quel que soit le nombre de mesures.

Selon un mode de réalisation de l'invention, l'estimateur peut être un estimateur bayésien. Cet estimateur permet de déterminer l'intervalle de confiance de l'estimation du COV de manière réactive avec un nombre limité de mesures.

Conformément à une mise en œuvre de l'invention, l'intervalle de confiance contient la valeur du COV réel dans exactement 98% des cas. En d'autres termes, la valeur du quantile réel est inférieure à l'intervalle de confiance dans 1% des cas et supérieure à l'intervalle de confiance dans 1% des cas.

Un exemple d'estimation bayésienne d'un intervalle de confiance est donné, de manière non limitative, en annexe de la présente demande (à la fin de la description).

Selon un mode de réalisation de l'invention, le nombre N peut être supérieur ou égal à 5, de préférence compris entre 5 et 20, et de manière préférée entre 7 et 15. En effet, au moins 5 valeurs permettent de construire un estimateur représentatif. De plus, la limite de 20 mesures permet de former un estimateur réactif et permet de limiter la mémoire vive utilisée pour le procédé selon l'invention. Cependant, pour une application ne nécessitant pas un estimateur réactif, le nombre N peut être pris aussi grand que possible. De plus, de préférence, le nombre N de cycles peut être identique au nombre N utilisé dans l'étape 2.

## 7/ Commande du moteur à combustion interne

Lors de cette étape facultative, on commande le moteur à combustion interne en fonction de l'indicateur de stabilité de combustion déterminé à l'étape 5, et/ou le cas échéant au moyen de l'estimateur déterminé à l'étape 6. La commande du moteur à combustion interne a pour but de conserver la stabilité de la combustion au sein du cylindre du moteur à combustion interne, et d'en améliorer le rendement, et éventuellement de limiter les émissions de polluants.

Selon un mode de réalisation de l'invention, on peut commander le moteur à combustion interne par contrôle de la quantité de carburant injectée dans la préchambre. Alternativement et/ou additionnellement, on peut contrôler la richesse du mélange carburé (air et carburant) dans le cylindre, par exemple par commande d'une vanne papillon, d'une soupape d'admission, d'un turbocompresseur. Alternativement et/ou additionnellement, on peut contrôler le niveau de recirculation des gaz brûlés (EGR), par exemple par commande d'une vanne EGR., etc. Alternativement et/ou additionnellement, on peut contrôler l'avance à l'allumage.

Dans la suite de la description, on appelle actionneur tout composant du moteur à combustion interne apte à être commandé pour modifier les conditions de la combustion. Il peut s'agir des composants listés ci-dessus, notamment l'injecteur, vanne papillon, une soupape d'admission, un turbocompresseur, une vanne EGR, etc. Par convention, on peut définir qu'une diminution de l'actionneur diminue l'indicateur de stabilité et qu'une augmentation de l'actionneur augmente l'indicateur de stabilité

Conformément à une mise en œuvre de l'invention, on peut commander au moins un actionneur en fonction d'une comparaison de l'indicateur de stabilité avec un seuil prédéfini de l'indicateur. Par exemple, si l'indicateur de stabilité est inférieur au seuil prédéfini, alors on peut augmenter l'actionneur, et si l'indicateur de stabilité est supérieur ou égal au seuil prédéfini, alors on peut diminuer l'actionneur.

Pour le mode de réalisation, dans lequel on met en œuvre l'estimateur déterminé à l'étape 6, on peut commander le moteur à combustion interne au moyen d'une comparaison de l'intervalle de confiance avec un seuil prédéfini de l'indicateur de stabilité de combustion (ce seuil est également appelé cible). En d'autres termes, il s'agit de vérifier si le seuil de stabilité de combustion est dans l'intervalle de confiance. Le seuil de l'indicateur de stabilité de combustion peut être obtenu par essais au banc moteur durant la phase de calibration du moteur.

Selon un aspect, le seuil prédéfini de l'indicateur peut être compris entre 1 et 7%, et peut valoir 3% par exemple.

La commande de l'avance à l'allumage peut être réalisée de la manière suivante :

    i) si le seuil de l'indicateur est inférieur à la borne inférieure de l'intervalle de confiance encadrant l'espérance estimée du cov, alors on diminue l'actionneur ;

    ii) si le seuil de l'indicateur est supérieur à la borne supérieure de l'intervalle de confiance encadrant l'espérance estimée de cov, alors on augmente l'actionneur ; et

    iii) sinon (si ledit seuil de l'indicateur est compris dans l'intervalle de confiance ($cov_{min}$, $cov_{max}$)) on ne modifie pas l'actionneur.

Ainsi, le procédé de commande selon ce mode de réalisation de l'invention permet de ne prendre que des actions correctives pertinentes : la commande de l'allumage ou de la richesse n'est modifiée que si l'on est sûr (par exemple à 99%, si l'intervalle de confiance centré représente 98 % des réalisations de la distribution) que le cov cible est en dehors de l'intervalle de confiance. La commande d'avance à l'allumage ou de la richesse ou de l'EGR est par conséquent plus stable, car des changements ne sont imposés qu'un cycle sur cinquante environ en régime stabilisé. La réduction de la dispersion de la commande et de la variation de l'état moteur sur les courtes échelles de temps implique en retour la possibilité de s'approcher de la limite de stabilité de la combustion, d'obtenir un meilleur rendement tout en limitant le nombre de cycles instables.

Cette étape de comparaison et de commande peut être implantée sur une mémoire « buffer » contenant les indicateurs des N précédents cycles. Alternativement, elle peut être implémentée en utilisant des filtres à réponse impulsionnel finie. Cette possibilité permet de ne mémoriser de cycle à cycle que quelques variables, contrairement à la mémoire « buffer » qui exige plus de mémoire.

Dans chaque stratégie, un actuateur affectant à la fois la stabilité et le rendement est contrôlé.

Plutôt que de réagir à chaque cycle, de façon erronée, le contrôle stochastique proposé par ce mode de réalisation (non limitatif) est un contrôle intégral, mais qui est désactivé dans la situation intermédiaire, lorsqu'on ne peut pas conclure (lorsque le seuil de l'indicateur est dans l'intervalle de confiance). Cette stratégie présente plusieurs avantages :

- la consigne de l'actuateur varie moins souvent qu'un simple contrôle intégral (par exemple 50 fois moins souvent si on considère un intervalle de confiance qui contient la valeur du quantile réel dans 98% des cas), si le système est proche de la cible $\theta$ du COV.
  L'ensemble du système sera plus aisément contrôlable car des fluctuations inutiles sont éliminées.

- Si le système est loin de sa cible $\theta$, le contrôleur voit systématiquement la cible hors de l'intervalle de confiance. Dans cette situation, le contrôleur proposé est donc aussi rapide qu'un contrôle intégral.

De plus, l'invention concerne un système de commande d'un moteur de combustion interne à allumage commandé comprenant des moyens pour la mise en œuvre du procédé selon l'une quelconque des combinaisons de variantes du procédé de commande décrites précédemment.

En particulier, le système de commande peut comprendre :

- un capteur de pression,
- des moyens de traitement du signal du capteur de pression,
- des moyens de calcul pour déterminer l'indicateur de qualité de combustion,
- une mémoire pour enregistrer N indicateurs (indicateurs des N précédents cycles de combustion),
- des moyens de calcul pour construire l'estimateur bayésien et pour réaliser la comparaison, et
- des moyens de commande d'au moins un actionneur.

Les moyens de traitement du signal, la mémoire, les moyens de calcul, et les moyens de commande peuvent être intégrés au sein d'un calculateur embarqué d'un véhicule.

L'invention concerne également un moteur de combustion interne équipé d'un tel système de commande.

En outre, l'invention concerne un produit programme d'ordinateur téléchargeable depuis un réseau de communication et/ou enregistré sur un support lisible par ordinateur (calculateur embarqué) et/ou exécutable par un processeur. Ce programme comprend des instructions de code de programme pour la mise en œuvre du procédé tel que décrit ci-dessus, lorsque le programme est exécuté sur un ordinateur ou un calculateur/contrôleur.

**Annexe**

Estimation bayésienne de l'intervalle de confiance du quantile.

Dans un but de simplification, cette annexe concerne l'estimation bayésienne pour une distribution normale.

I. MOTIVATIONS

On suppose que l'on dispose de n mesures du phénomène physique étudié, dont les caractéristiques aléatoires ne peuvent être négligées. On admet par ailleurs que ces mesures sont indépendantes et normalement distribuées. On dispose alors de n réalisations qu'on note $X_1,\dots,X_n$. Soit cov le vrai coefficient de variation de cette distribution. La formule de Bayes permet d'exprimer la distribution de la valeur de cov, au regard des mesures observées $X_1,\dots,X_n$. Naturellement, cov peut être estimé sans incertitude lorsque $n \to \infty$. Néanmoins, lorsque $n < \infty$ (par exemple $n = 10$), cov ne peut plus être estimé avec certitude.

En revanche, le formalisme bayésien nous permet de définir un intervalle qui encadre effectivement cov pour 98% des n-uplets possibles de n réalisations $X_1,...,X_n$ issues de cette même distribution.

## II. ESTIMATION DE L'INTERVALLE DE CONFIANCE DE LA MOYENNE

On présente tout d'abord la méthode qui consiste à déterminer la moyenne $\mu$ de la distribution (et non son cov), tout en supposant la variance $\sigma^2$ de la distribution connue. On introduit à cet effet la formule de Bayes :

$$\overbrace{\pi\left(\left(\mu_i,\sigma_i^2\right)\mid X_1,...,X_n\right)}^{distribution\ a\ posteriori} = \frac{\overbrace{\pi\left(X_1,...,X_n\mid\left(\mu_i,\sigma_i^2\right)\right)}^{vraisemblance}\ \overbrace{\pi\left(\mu_i,\sigma_i^2\right)}^{distribution\ a\ priori}}{\underbrace{\pi(X_1,...,X_n)}_{facteur\ de\ normalisation}}$$

avec $\pi$ la probabilité et | l'opérateur de conditionnement.

- Le facteur de normalisation ne dépend pas de $\mu$ et se comporte comme une constante.
- La loi a priori reflète les connaissances a priori dont on dispose sur la distribution de $\mu$ (indépendamment des observations qui sont faites consécutivement). Afin d'éviter d'insérer des informations biaisées (à considérer dans ce cadre comme des préjugés), nous utilisons l'a priori non informatif $\pi(\mu) \propto 1$.
- Les réalisations $(X_1,...,X_n)$ étant supposées conditionnellement (sachant $\mu$) indépendantes, nous pouvons factoriser la vraisemblance :

$$\pi(X_1,...,X_n\mid\mu) \propto \prod_{k=1}^{n}\pi(X_k\mid\mu)$$

On connaît alors l'écriture de tous les facteurs de la distribution a posteriori. La conduite du calcul nous amène à

$\pi(\mu\mid X_1,...,X_n) \propto \exp\frac{\left(\mu-\sum_{k=1}^{n}\frac{X_k}{n}\right)^2}{2\left(\sigma/\sqrt{n}\right)^2}$ qui n'est autre qu'une loi normale centrée sur la moyenne des $X_k$ et d'écart-type

$\frac{\sigma}{\sqrt{n}}$. Il est alors aisé d'obtenir l'intervalle de confiance de $\mu$, à savoir :

moyenne $\pm$ constante x écart-type.

## III. ESTIMATION DE L'INTERVALLE DE CONFIANCE DU COV

Les données expérimentales nous interdisent d'une part l'hypothèse $\sigma$ = constante et d'autre part l'hypothèse $\sigma$ fonction de $\mu$. On est alors contraint de faire l'estimation en parallèle du couple de paramètres $(\mu; \sigma)$. La méthodologie comporte 3 différences principales avec la simple estimation de la moyenne :

- La distribution a priori du couple $(\mu; \sigma)$ doit être judicieusement sélectionnée afin de demeurer non informative et de ne pas engendrer de biais injustifiés au cours de l'estimation. L'a priori $\pi(\mu) \propto 1$ a une forme très naturelle. En revanche, dans le cas multidimensionnel où l'on n'estime non pas seulement $\mu$ mais $(\mu; \sigma)$, la définition de la notion "non-informative" (absence de préjugés) présente une difficulté d'ordre supérieur. Les concepts d'information mutuelle et de maximisation d'entropie de l'information ont été mobilisés.
- La distribution a posteriori comporte 4 paramètres, exigeant une étape de renormalisation adaptée afin d'alléger considérablement la puissance de calcul nécessaire (évitant tout calcul intégral).
- La distribution a posteriori de $(\mu; \sigma)$ doit être traitée afin d'obtenir la distribution a posteriori du cov. La distribution a posteriori de cov n'admet pas de forme analytique simple (sans intégrales) et peut être réalisée en séparant le calcul en deux étapes : un calcul hors ligne coûteux des invariants de la distribution de cov et un calcul en ligne léger à chaque cycle.

**Revendications**

1. Procédé de détermination d'un indicateur de stabilité d'une combustion dans au moins un cylindre d'un moteur à combustion interne à allumage commandé, ledit au moins un cylindre dudit moteur à combustion interne étant équipé d'un capteur de pression, dans lequel on met en oeuvre les étapes suivantes :

   a. Pour chaque cycle, on détermine une quantité de carburant injecté dans ledit au moins un cylindre ($Q_{inj}$),
   b. Pour chaque cycle, on mesure (MES) ladite pression au sein dudit au moins un cylindre au moyen dudit capteur de pression, et on en déduit une pression moyenne indiquée (PMI),
   c. Pour chaque cycle, on détermine un rendement ($\eta$) dudit moteur à combustion interne au moyen d'une cartographie du rendement, et
   d. On détermine un ratio (RAT) formé par ladite pression moyenne indiquée divisée par un produit dudit rendement par ladite quantité de carburant injecté dans ledit au moins un cylindre,
   e. On caractérise (EST) ledit indicateur de stabilité à partir dudit ratio déterminé, pour chaque cycle par détermination du ratio de l'écart type dudit ratio déterminé sur la moyenne dudit ratio déterminé.

2. Procédé de détermination d'un indicateur de stabilité d'une combustion selon la revendication 1, dans lequel on détermine ladite quantité de carburant injecté ($Q_{inj}$) dans ledit au moins un cylindre au moyen d'une consigne de quantité de carburant injecté.

3. Procédé de détermination d'un indicateur de stabilité d'une combustion selon l'une des revendications précédentes, dans lequel ladite cartographie du rendement dépend du régime et du couple du moteur à combustion interne.

4. Procédé de détermination d'un indicateur de stabilité d'une combustion selon l'une des revendications précédentes, dans lequel on caractérise (EST) ledit indicateur de stabilité par détermination d'un estimateur d'une distribution dudit indicateur de stabilité d'une combustion, ledit estimateur déterminant un intervalle de confiance (idc) de l'indicateur de stabilité d'une combustion à partir d'un nombre N de cycles précédents le cycle en cours.

5. Procédé de détermination d'un indicateur de stabilité d'une combustion selon la revendication 4, dans lequel ledit estimateur est bayesien.

6. Procédé de détermination d'un indicateur de stabilité d'une combustion selon l'une des revendications 4 ou 5, dans lequel ledit nombre N de cycles est compris entre 5 et 20.

7. Procédé de détermination d'un indicateur de stabilité d'une combustion selon l'une des revendications 4 à 6, dans lequel ledit intervalle de confiance (idc) contient la valeur du ratio de l'écart type sur la moyenne du ratio de l'écart type dudit ratio déterminé sur la moyenne dudit ratio déterminé réel dans exactement 98% des cas.

8. Procédé de détermination d'un indicateur de stabilité d'une combustion selon l'une des revendications précédentes, dans lequel ledit moteur à combustion interne est un moteur à combustion interne fonctionnant avec des richesses pauvres, et/ou ledit moteur à combustion interne est équipé d'une préchambre de combustion et/ou ledit moteur à combustion interne est équipé d'un système de recirculation des gaz brûlés.

9. Procédé de commande d'un moteur à combustion interne à allumage commandé, au moins un cylindre dudit moteur à combustion interne étant équipé d'un capteur de pression, **caractérisé en ce qu'**on met en œuvre les étapes suivantes :

   a. On détermine un indicateur de stabilité d'une combustion au moyen du procédé de détermination d'un indicateur de stabilité d'une combustion selon l'une des revendications précédentes ; et
   b. On commande (CON) ledit moteur à combustion interne en fonction dudit indicateur de stabilité de combustion déterminé.

10. Procédé de commande selon la revendication 9, dans lequel on commande (CON) ledit moteur à combustion interne par contrôle d'un actionneur dudit moteur à combustion interne, en fonction d'une comparaison (COMP) dudit indicateur de stabilité avec un seuil prédéfini ($\theta$).

11. Procédé de commande selon la revendication 10, dans lequel on met en œuvre la détermination dudit estimateur selon l'une des revendications 5 à 8, et dans lequel on commande (CON) ledit moteur à combustion interne au moyen desdites étapes suivantes, en fonction d'un seuil prédéfini θ dudit indicateur :

> i) si ledit seuil dudit indicateur θ est inférieur à une borne inférieure $cov_{min}$ dudit intervalle de confiance dudit ratio de l'écart type dudit ratio déterminé sur la moyenne dudit ratio déterminé, alors on diminue l'actionneur pour diminuer l'indicateur de stabilité ;
> ii) si ledit seuil dudit indicateur θ est supérieur à une borne supérieure $cov_{max}$ dudit intervalle de confiance dudit ratio de l'écart type dudit ratio déterminé sur la moyenne dudit ratio déterminé, alors on augmente l'actionneur pour augmenter l'indicateur de stabilité ; et
> iii) si ledit seuil dudit indicateur θ est compris dans ledit intervalle de confiance ($cov_{min}$, $cov_{max}$), alors on ne modifie pas l'actionneur.

**12.** Système de commande d'un moteur à combustion interne à allumage commandé, ledit moteur à combustion interne à allumage commandé comprenant un cylindre dudit moteur à combustion interne équipé d'un capteur de pression, ledit système comprenant au moins un calculateur mettant en œuvre le procédé de commande selon l'une des revendications 9 à 11.

**13.** Produit programme d'ordinateur téléchargeable depuis un réseau de communication et/ou enregistré sur un support lisible par ordinateur et/ou exécutable par un processeur, comprenant des instructions de code de programme pour la mise en œuvre d'un procédé selon l'une des revendications 1 à 11, lorsque ledit programme est exécuté sur un ordinateur ou un calculateur.

**Patentansprüche**

**1.** Verfahren zur Bestimmung eines Stabilitätsindikators einer Verbrennung in mindestens einem Zylinder eines Verbrennungsmotors mit Fremdzündung, wobei der mindestens eine Zylinder des Verbrennungsmotors mit einem Drucksensor ausgestattet ist, wobei die folgenden Schritte durchgeführt werden:

> a. Für jeden Zyklus wird eine in den mindestens einen Zylinder eingespritzte Kraftstoffmenge ($Q_{inj}$) bestimmt,
> b. Für jeden Zyklus wird der Druck in dem mindestens einen Zylinder mittels des Drucksensors gemessen und daraus ein angegebener mittlerer Druck (PMI) abgeleitet,
> c. Für jeden Zyklus wird ein Wirkungsgrad ($\eta$) des Verbrennungsmotors mittels eines Wirkungsgrad-Kennfelds bestimmt, und
> d. Es wird ein Verhältnis (RAT) bestimmt, das durch den angegebenen mittleren Druck dividiert durch ein Produkt aus dem Wirkungsgrad und der in den mindestens einen Zylinder eingespritzten Kraftstoffmenge gebildet wird,
> e. Der Stabilitätsindikator (EST) wird ausgehend von dem bestimmten Verhältnis für jeden Zyklus durch Bestimmen des Verhältnisses der Standardabweichung des bestimmten Verhältnisses zum Mittelwert des bestimmten Verhältnisses charakterisiert.

**2.** Verfahren zur Bestimmung eines Stabilitätsindikators einer Verbrennung nach Anspruch 1, wobei die in den mindestens einen Zylinder eingespritzte Kraftstoffmenge ($Q_{inj}$) mittels eines Sollwerts einer eingespritzten Kraftstoffmenge bestimmt wird.

**3.** Verfahren zur Bestimmung eines Stabilitätsindikators einer Verbrennung nach einem der vorhergehenden Ansprüche, wobei das Wirkungsgrad-Kennfeld von der Drehzahl und dem Drehmoment des Verbrennungsmotors abhängt.

**4.** Verfahren zur Bestimmung eines Stabilitätsindikators einer Verbrennung nach einem der vorhergehenden Ansprüche, wobei der Stabilitätsindikator durch Bestimmung eines Schätzers einer Verteilung des Stabilitätsindikators einer Verbrennung charakterisiert wird (EST), wobei der Schätzer ein Konfidenzintervall (idc) des Stabilitätsindikators einer Verbrennung ausgehend von einer Anzahl von N von Zyklen, die dem aktuellen Zyklus vorausgehen, bestimmt wird.

**5.** Verfahren zur Bestimmung eines Stabilitätsindikators einer Verbrennung nach Anspruch 4, wobei der Schätzer ein Bayes-Schätzer ist.

**6.** Verfahren zur Bestimmung eines Stabilitätsindikators einer Verbrennung nach einem der Ansprüche 4 oder 5, wobei die Anzahl N von Zyklen zwischen 5 und 20 beträgt.

7. Verfahren zur Bestimmung eines Stabilitätsindikators einer Verbrennung nach einem der Ansprüche 4 bis 6, wobei das Konfidenzintervall (idc) den Wert des Verhältnisses der Standardabweichung zum Mittelwert des Verhältnisses der Standardabweichung des bestimmten Verhältnisses zum Mittelwert des realen bestimmten Verhältnisses in genau 98 % der Fälle enthält.

8. Verfahren zur Bestimmung eines Stabilitätsindikators einer Verbrennung nach einem der vorhergehenden Ansprüche, wobei der Verbrennungsmotor ein Verbrennungsmotor ist, der mit mageren Gemischen betrieben wird, und/oder wobei der Verbrennungsmotor mit einer Verbrennungsvorkammer ausgestattet ist und/oder wobei der Verbrennungsmotor ist mit einem Abgasrückführungssystem ausgestattet ist.

9. Verfahren zur Steuerung eines Verbrennungsmotors mit Fremdzündung, wobei mindestens ein Zylinder des Verbrennungsmotors mit einem Drucksensor ausgestattet ist, **dadurch gekennzeichnet, dass** die folgenden Schritte durchgeführt werden:

   a. Ein Stabilitätsindikator einer Verbrennung wird mittels des Verfahrens zur Bestimmung eines Stabilitätsindikators einer Verbrennung nach einem der vorhergehenden Ansprüche bestimmt; und
   b. Der Verbrennungsmotor wird in Abhängigkeit von dem bestimmten Verbrennungsstabilitätsindikator gesteuert (CON) .

10. Verfahren zur Steuerung nach Anspruch 9, wobei der Verbrennungsmotor durch Kontrollieren eines Aktuators des Verbrennungsmotors in Abhängigkeit von einem Vergleich (COMP) des Stabilitätsindikators mit einem vordefinierten Schwellenwert ($\theta$) gesteuert (CON) wird.

11. Verfahren zur Steuerung nach Anspruch 10, wobei das Bestimmen des Schätzers nach einem der Ansprüche 5 bis 8 durchgeführt wird und wobei der Verbrennungsmotor mittels der folgenden Schritte in Abhängigkeit von einem vordefinierten Schwellenwert $\theta$ des Indikators gesteuert (CON) wird:

    i) wenn der Schwellenwert des Indikators $\theta$ unter einem unteren Grenzwert $cov_{min}$ des Konfidenzintervalls des Verhältnisses der Standardabweichung des bestimmten Verhältnisses zum Mittelwert des bestimmten Verhältnisses liegt, wird der Aktuator verringert, um den Stabilitätsindikator zu verringern;
    ii) wenn der Schwellenwert des Indikators $\theta$ über einem oberen Grenzwert $cov_{max}$ des Konfidenzintervalls des Verhältnisses der Standardabweichung des bestimmten Verhältnisses zum Mittelwert des bestimmten Verhältnisses liegt, wird der Aktuator erhöht, um den Stabilitätsindikator zu erhöhen;
    iii) wenn der Schwellenwert des Indikators $\theta$ innerhalb des Konfidenzintervalls ($cov_{min}$, $cov_{max}$) liegt, wird der Aktuator nicht geändert.

12. System zur Steuerung eines Verbrennungsmotors mit Fremdzündung, wobei der Verbrennungsmotor mit Fremdzündung einen Zylinder des Verbrennungsmotors umfasst, der mit einem Drucksensor ausgestattet ist, wobei das System mindestens einen Rechner umfasst, der das Verfahren zur Steuerung nach einem der Ansprüche 9 bis 11 durchführt.

13. Computerprogrammprodukt, das aus einem Kommunikationsnetz heruntergeladen werden kann und/oder auf einem computerlesbaren Medium gespeichert ist und/oder von einem Prozessor ausgeführt werden kann, umfassend Programmcodeanweisungen, die bei der Ausführung des Programms auf einem Computer oder einem Rechner ein Verfahren nach einem der Ansprüche 1 bis 11 durchführen.

**Claims**

1. Method for determining a combustion stability indicator in at least one cylinder of a controlled-ignition internal combustion engine, said at least one cylinder of said internal combustion engine being equipped with a pressure sensor, wherein the following steps are implemented:

   a. for each cycle, an amount of fuel injected ($Q_{inj}$) into said at least one cylinder is determined,
   b. for each cycle, said pressure within said at least one cylinder is measured (MES) by means of said pressure sensor, and a mean indicated pressure (MIP) is deduced therefrom,
   c. for each cycle, an efficiency ($\eta$) of said internal combustion engine is determined by means of an efficiency map, and

d. a ratio (RAT) formed by said mean indicated pressure divided by a product of said efficiency and said amount of fuel injected into said at least one cylinder is determined,

e. said stability indicator is characterized (EST) on the basis of said determined ratio, for each cycle, by determining the ratio of the standard deviation of said determined ratio to the mean of said determined ratio.

2. Method for determining a combustion stability indicator according to Claim 1, wherein said amount of fuel injected ($Q_{inj}$) into said at least one cylinder is determined by means of a setpoint for the amount of fuel injected.

3. Method for determining a combustion stability indicator according to either of the preceding claims, wherein said efficiency map is dependent on the speed and the torque of the internal combustion engine.

4. Method for determining a combustion stability indicator according to any of the preceding claims, wherein said stability indicator is characterized (EST) by determining an estimator of a distribution of said combustion stability indicator, said estimator determining a confidence interval (idc) of the combustion stability indicator on the basis of a number N of cycles preceding the current cycle.

5. Method for determining a combustion stability indicator according to Claim 4, wherein said estimator is Bayesian.

6. Method for determining a combustion stability indicator according to either of Claims 4 and 5, wherein said number N of cycles is between 5 and 20.

7. Method for determining a combustion stability indicator according to any of Claims 4 to 6, wherein said confidence interval (idc) contains the value of the ratio of the standard deviation to the mean of the ratio of the standard deviation of said determined ratio to the mean of said actual determined ratio in exactly 98% of cases.

8. Method for determining a combustion stability indicator according to any of the preceding claims, wherein said internal combustion engine is a lean-burn internal combustion engine, and/or said internal combustion engine is equipped with a combustion pre-chamber and/or said internal combustion engine is equipped with an exhaust gas recirculation system.

9. Method for controlling a controlled-ignition internal combustion engine, at least one cylinder of said internal combustion engine being equipped with a pressure sensor, **characterized in that** the following steps are implemented:

a. a combustion stability indicator is determined by means of the method for determining a combustion stability indicator according to any of the preceding claims; and

b. said internal combustion engine is controlled (CON) as a function of said determined combustion stability indicator.

10. Control method according to Claim 9, wherein said internal combustion engine is controlled (CON) by controlling an actuator of said internal combustion engine as a function of a comparison (COMP) of said stability indicator with a predefined threshold ($\theta$).

11. Control method according to Claim 10, wherein the determination of said estimator according to any of Claims 5 to 8 is carried out, and wherein said internal combustion engine is controlled (CON) by means of said following steps, as a function of a predefined threshold $\theta$ of said indicator:

i) if said threshold of said indicator $\theta$ is lower than a lower limit $cov_{min}$ of said confidence interval of said ratio of the standard deviation of said determined ratio to the mean of said determined ratio, then the actuator is decreased in order to decrease the stability indicator;

ii) if said threshold of said indicator $\theta$ is greater than an upper limit $cov_{max}$ of said confidence interval of said ratio of the standard deviation of said determined ratio to the mean of said determined ratio, then the actuator is increased in order to increase the stability indicator; and

iii) if said threshold of said indicator $\theta$ is within said confidence interval ($cov_{min}$, $cov_{max}$), then the actuator is not modified.

12. System for controlling a controlled-ignition internal combustion engine, said controlled-ignition internal combustion engine comprising a cylinder of said internal combustion engine that is equipped with a pressure sensor, said system comprising at least one calculator implementing the control method according to any of Claims 9 to 11.

13. Computer program product downloadable from a communication network and/or recorded on a medium that is readable by computer and/or executable by a processor, comprising program code instructions for implementing a method according to any of Claims 1 to 11, when said program is executed on a computer or a calculator.

[Fig 1]

$$\text{MES} \rightarrow \text{PMI}$$

$$\eta$$

$$Q_{inj}$$

$$\text{RAT} \quad \frac{PMI}{\eta Q_{inj}} \quad \text{EST} \xrightarrow{\text{cov}}$$

[Fig 2]

$$\text{MES} \rightarrow \text{PMI}$$

$$\eta$$

$$Q_{inj}$$

$$\text{RAT} \quad \frac{PMI}{\eta Q_{inj}} \quad \text{EST} \xrightarrow{\text{cov, idc}}$$

[Fig 3]

$$\theta$$

$$\text{MES} \rightarrow \text{PMI}$$

$$\eta$$

$$Q_{inj}$$

$$\text{RAT} \quad \frac{PMI}{\eta Q_{inj}} \quad \text{EST} \xrightarrow{\text{cov}} \text{COMP} \rightarrow \text{CON}$$

[Fig 4]

[Fig 5]

[Fig 6]

[Fig 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007051170 A
- KR 20090065372
- US 2004084018 A
- JP H08144830 A
- WO 19163507 A
- US 2016146702 A
- US 2019010890 A